# NEW EUROPEAN PATENT SPECIFICATION

(11) **EP 0 836 659 B2**
(45) Date of publication and mention of the opposition decision: **23.03.2005**
(45) Mention of the grant of the patent: 03.07.2002
(21) Application number: 97921722.1
(22) Date of filing: 23.04.1997
(51) Int. Cl.: E01C 23/088

(54) **CHASSIS FOR A MACHINE FOR STRIPPING OFF ROAD SURFACES**
FAHRWERK FÜR EINE MASCHINE ZUM ABFRÄSEN VON STRASSENBELÄGEN
CHASSIS DE MACHINE DESTINEE AU RABOTAGE DE REVETEMENTS ROUTIERS

(30) Priority: 02.05.1996 DE 19617442
(43) Date of publication of application: 22.04.1998
(73) Proprietor: WIRTGEN GmbH, 53578 Windhagen (DE)
(72) Inventor: BUSLEY, Peter, D-56594 Willroth (DE)
(74) Representative: Luderschmidt, Schüler & Partner GbR
(86) International application number: PCT/EP1997/002072
(87) International publication number: WO 1997/042377

(56) References cited:
- EP-A- 0 692 183
- WO-A-94/08094
- FR-A- 2 609 262
- FR-A- 2 631 586
- FR-A- 2 642 773
- US-A- 2 208 599
- US-A- 2 208 600
- US-A- 2 217 816
- US-A- 2 217 818
- US-A- 2 232 972
- US-A- 4 186 968
- US-A- 4 247 126
- US-A- 4 270 801
- US-A- 4 325 580

## Description

The invention relates to a chassis for a machine for stripping off road surfaces, according to the preamble to claim 1.

Such a chassis is known from EP 0 557 763 B1.

Where this prior art chassis is concerned, the front wheels are mounted on the frame via a front axle which is not adjustable in its height but is pivotable parallel with the longitudinal axis of the frame. Such pivotability of the front axle is advantageous because a rear chassis axle together with the milling-cutting roller disposed between the wheels of the rear axle permanently retains the cutting depth and transverse inclination adjusted at the start of the cutting process and the front axle is able to accommodate the variations in the transverse inclination of the road. The front wheels are in addition pivotable on the front axle about an axis at right-angles to the frame plane in order that the vehicle can be steered. In addition, also the wheels of the rearchassis axle can be steerable about a small angle (corrective steering).

For the purposes of the present description and in the claims, the term "frame plane" means the plane which is substantially horizontal under conditions of use and which extends through the longitudinal and transverse members of the chassis frame. The term "central plane through the frame" means the central plane through the frame and extending at right-angles to the frame plane in the longitudinal direction of the frame (equal to the direction of travel). Transverse inclination is the slope of the road surface in a direction crosswise to the direction of travel.

Machines for stripping off road surfaces and which comprise a chassis of the above-described type are characterised by high maneouvrability. They are generally referred to as small milling cutters. Also these small milling cutters are already of considerable weight and since by virtue of the small footprint of the wheels the resulting ground pressure is very high, the rear wheels of the milling cutter may not travel in the track which has been cut. This would result in the wheels sinking in and so lead to an error in the adjusted cutting depth. For this reason, where small milling cutters are concerned, the cutting-milling roller is disposed between the rear wheels.

In order to be able to use such a small milling cutter also for edge-to-edge cutting, the jockey wheel disposed on what is referred to as the neutral side of the cutting machine is pivoted in front of the cutting-milling roller. The neutral side of the milling-cutting machine is that side of the machine on which the end face of the cutting-milling roller is virtually flush with the adjacent inside contours of the cutting-milling machine so that it is possible to cut or mill directly up to an obstacle.

If a front axle is used which is pivotable about an axis parallel with the longitudinal axis through the frame, then when there are differences in height in the cross-section of the road (this happens for example when one of the two front wheels is running in a track which has already been cut), the front wheels run on their edges, by virtue of the transverse inclination of the front axle. As a result, there is a breaking out of the treads and generally increased wear and tear.

US-A-4,270,801 discloses a roadway planning machine running on transporters. The transporters are axially positionable on the chassis along axes which are perpendicular to the axis the machine so that the chassis can be positioned in height and attitude relative to the work surface. For positioning the chassis via the transporters a hydraulic control circuit is provided which can be used for manually or automatically positioning the chassis in accordance with a preselected reference. The roadway planning machine according to the prior art comprises a complicated control mechanism for controlling separately each single transporter in order to position the chassis.

The present invention is intended so further to develop a chassis according to the preamble to claim 1 that even when there are differences in height in the road cross-section, the front wheels stand fully on the tread.

According to the invention, this problem is resolved by a chassis having the features indicated in claim 1.

The following further advantages are obtained by reason of the invention:

In the case of a chassis according to the invention, there is greater ground clearance in comparison with the prior art chassis, in which a portion of the pivotable front axle is in the immediate vicinity of the road surface. By virtue of the greater ground clearance, therefor, the cutting depth can be increased in the case of overlapping cutting tracks.

In the case of machines for stripping off road surfaces, the stripped off material is carried away by using a short conveyor belt disposed under the chassis and extending forwardly from the milling-cutting roller. With a pivotable front axle, it is necessary to resort to complicated design solutions since this conveyor belt has to be guided through the front axle under conditions of very confined space. Where a chassis according to the invention is concerned, there is sufficient space for such a conveyor belt between the front wheels.

In the case of a chassis according to the invention, also the cutting depth can be widely adjusted, the slope parameters for the milling-cutting roller (apart from the modified cutting depth) cannot be changed when the rear wheels are lowered or raised. Also the removal of stripped off surfacing material can be carried out equally well for different cutting depths.

Thus, the present invention indicates a chassis for a machine for stripping off road surfaces where the two front wheels can be moved on a push-pull basis in a direction at right-angles to the tread, while a broad footprint is nevertheless guaranteed, whereby the space disposed between the front wheels is clear.

The push-pull positive coupling of the two wheel supports is achieved by hydraulic working cylinders with equivalent working chambers connected by at least one coupling line. Such a coupling of the adjustment of the front wheels at right-angles to the tread is characterised by particular robustness.

Advantageous further developments of the invention are indicated in the sub-claims.

With the further development of the invention according to claim 2, it is possible for the front end of the frame of the chassis additionally to be adjusted in a vertical direction.

In the case of a chassis according to claim 3, there is a doubled hydraulic push-pull positive coupling of the movement of the wheel supports so that there is always one liquid column which is loaded by pressure.

With the further development of the invention according to claim 4, it is possible additionally to adjust the front end of the flame of the chassis in a vertical direction whereby this purpose is served by the same working cylinders which also serve for the vertical coupling of the two wheel supports.

With the further development of the invention according to claim 5, the coupling of the vertical movement of the wheels is effected by bilaterally clamped liquid columns (the pressurised fluid supplied is subject to pump pressure while hydraulic fluid which is carried away is throttled).

The further development of the invention according to claim 6 is of advantage with regard to increasing the safety of the hydraulic interlocking arrangement. A control valve serving to raise and lower the front end of the chassis does not need to be used for interlocking purposes and therefore does not need to be of extremely leakage-free design.

The further development of the invention according to claim 7 is advantageous in view of a simple fitment and removal of the working cylinders which couple the vertical movements of the wheel supports.

In this case, where a chassis according to claim 8 is concerned, the hydraulic connections to the two working chambers of the working cylinders can be established and removed in a particularly simple fashion and can also be readily checked visually.

A chassis according to independent claim 9 is characterised by a particularly simple and favourably costed construction.

At the same time, unidirectional entraining couplings such as are indicated in claim 10 and/or 11, are in turn advantageous with regard to simple construction and high loading capacity under severe conditions of use.

The further development of the invention according to claim 12 makes it possible to use the guides for the wheel supports as bearings for steering the wheels at the same time.

A chassis according to independent claim 13 is characterised by particularly low construction of the coupling device.

In this respect, the coupling of the two pinions of the coupling device such as is indicated in claim 14, is advantageous in terms of simple construction from standard engineering elements. The further development of the invention according to claim 14 embodies a particularly robust and simple coupling of the two pinions of the coupling device.

In the case of a chassis according to independent claim 15, the push-pull movement of the two front wheels is achieved without a mechanical connection. This is advantageous for many applications.

If the wheel supports for the front wheels of the chassis according to independent claim 15 are disposed on link members (claim 16), then the guides for the wheels can be constructed particularly cheaply. For many applications, nevertheless, a sufficient travel of the individual wheel supports is achieved.

The further development of the invention according to claim 18 is advantageous by virtue of a considerable push-pull travel of the front wheels.

At the same time, by virtue of the further development of the invention according to claim 19, it is in addition achieved that the guide bushes which serve for vertical guidance also constitute steering bearings.

The further development of the invention according to claim 20 is advantageous in terms of simple actuation of the steering.

A chassis according to claim 21 is thereby characterised by considerable ground clearance in the area of the front axle.

The invention is explained in greater detail hereinafter with reference to examples of embodiment, reference being made to the accompanying drawings, in which:
- Fig. 1: is a diagrammatic plan view of a small milling cutter for stripping off road surfaces;
- Fig.2: shows a section through the front wheel suspension of the chassis of the small milling cutter according to Fig. 1 taken along the section line II-II;
- Fig.3: shows a section through the front wheel suspension shown in Fig. 2 taken along the section line III-III;
- Fig.4: shows a cross-section through the working cylinders which belong to the front wheel suspension in Fig. 2, showing that on the left in Fig. 4 in its retracted state while that on the right in Fig. 4 is shown in its extended stage;
- Fig.5: is a circuit diagram of the hydraulic parts of the front wheel suspension shown in Figs. 2 and 3;
- Figs.6 to 8: are partially sectional front views of modified front wheel suspensions for a small milling cutter, and
- Fig.9: is a diagrammatic view of a further modified front wheel suspension for a small. milling cutter together with an associated electronic control unit.

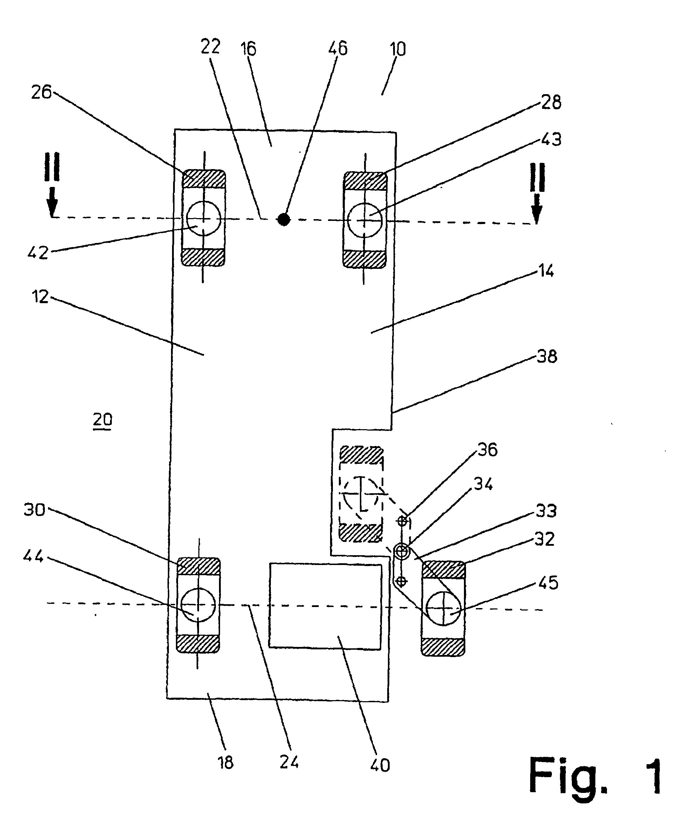

Fig. 1 shows a small milling cutter for stripping off road surfaces and which comprises a chassis frame generally designated 10. The chassis frame 10 has longitudinal members 12, 14 and transverse members 16, 18. These members span a frame plane 20.

The chassis frame is supported by a front axle generally designated 22 and a rear axle generally designated 24.

The front axle 22 comprises a left-side front wheel 26 and a right-side front wheel 28 and these wheels are, in a manner to be described more precisely hereinafter, so suspended from the chassis frame 10 that they are able to move in a direction at right-angles to the frame plane 20, these movements being however so coupled that the front wheels move by the same amounts in opposite directions.

A left-side rear wheel 30 is rigidly mounted on the chassis frame 10. A right-side rear wheel is mounted on a pivotable supporting plate 33. This supporting plate is able to pivot about a pivot axis 34 at right-angles to the frame plane between a normal position shown by a solid line, in which the right-side rear wheel 32 projects beyond the inside contours of the chassis frame 10, and a retracted position which is shown by broken lines in the drawing and in which the rear wheel 32 is located within the right-hand boundary line of the chassis frame 10. This boundary line is also referred to as the neutral side of the small milling cutter and is identified by reference numeral 38.

A milling cutter roller 40 is so mounted on the chassis frame 10 that in the working position of the right-side rear wheel 32, it is in the middle between the two rear wheels, whereby the end face of the milling cutter roller 40 shown on the right in Fig. 1 is situated close to the neutral side 38.

The front wheels 26, 28 are suspended from the chassis frame 10 by means of lifting columns 42, 43 to be described in greater detail hereinafter.

The left side rear wheel 30 is supported on the chassis frame 10 via a lifting column 44. Similarly, the right-side rear wheel 32 is mounted on the supporting plate 33 via a lifting column 45. By adjusting the working lengths of the lifting columns 44,45, it is possible to adjust the cutting depth and the transverse inclination of the cutting surface.

Should it be desired to strip the surface from a road as far as to the immediate vicinity of an obstruction (e.g. a kerb stone), the supporting plate 33 is moved into its retracted position shown by broken lines and it is then possible to cut as far as the immediate vicinity of the obstruction with the neutral side 38 of the small milling cutter.

By virtue of the above-described suspension of the two rear wheels 30, 32, it is guaranteed that they do not run in the milling track cut by the milling-cutter roller 30.

Due to the aforementioned push-pull coupling of the vertical displacement of the two front wheels 26, 28, the chassis as a whole behaves like a three-wheel arrangement, the third wheel of which is disposed on the central point 46 of the front wheel arrangement, the height of this imaginary wheel (which would be mounted on the frame via an identical lifting column) corresponds to the mean value of the heights of the two front wheels 26,28.

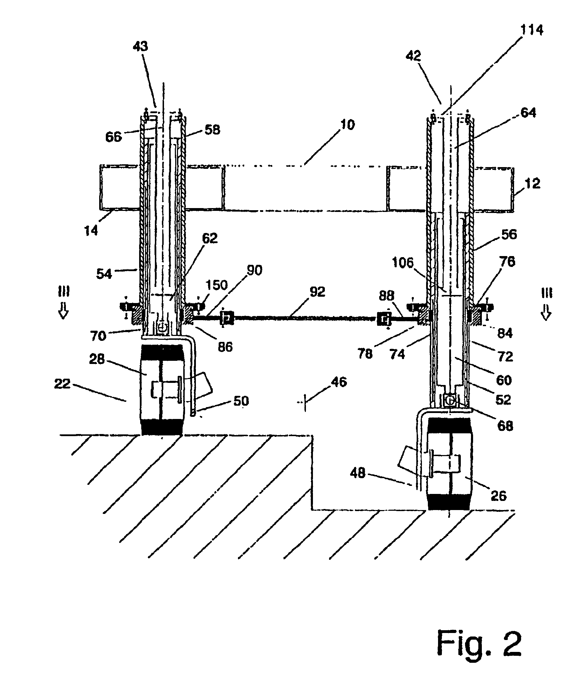

As Fig. 2 shows, the front wheels 26, 28 are mounted on wheel supports 48, 50.

These latter are fixed on hollow guide rod 52, 54 which run in guide cylinders 56, 58. The latter are fixed, for example welded, onto the chassis frame 10.

In the interior of the guide cylinder 58 is a first double-acting working cylinder 60 and in the interior of the guide cylinder 58 there is a double-acting working cylinder 62 which is identical to the working cylinder 60. The piston rods 64, 66 of the working cylinders 60, 62 are fixed at the upper end of the guide cylinders 54, 58, while the housings of the working cylinders 60, 62 are connected to the adjacent wheel supports 48, 50 via hinge pins 68, 70.

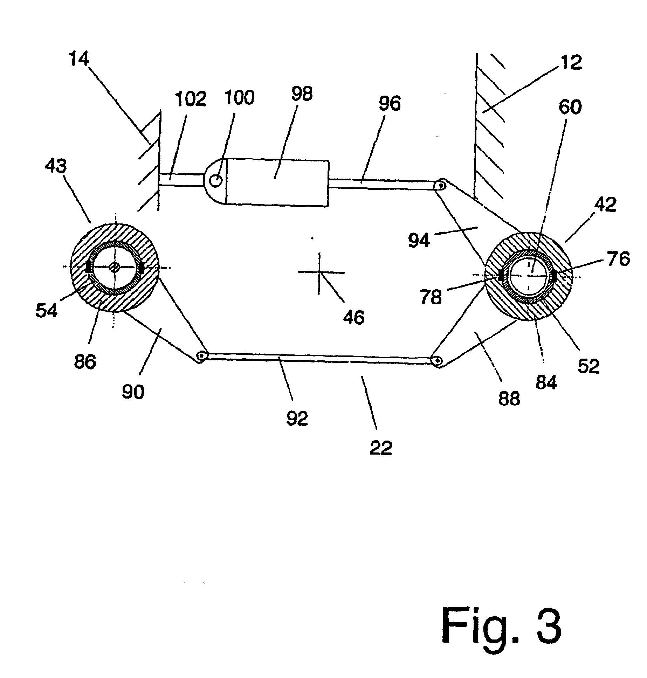

As Figs. 2 and 3 show, the guide rods 52, 54 respectively have entraining slots 72, 74 which extend in an axial direction. Running in each of these slots is an entraining spring 76, 78. The entraining springs 76, 78 are in turn seated in entraining slots 80, 82 of link rings 84, 86. Welded onto each of the link rings 84, 86 is a track arm 88, 90. The track arms 88, 90 are articulatingly connected by a track rod 92. The link ring 86 for the right-side front wheel 28 additionally carries a drive lever 94 which is articulatingly connected to the piston rod 96 of a steering-assisting working cylinder 98. The housing of this is fixed by means of a hinge journal 100 on lugs 102 which are welded to the chassis frame 10.

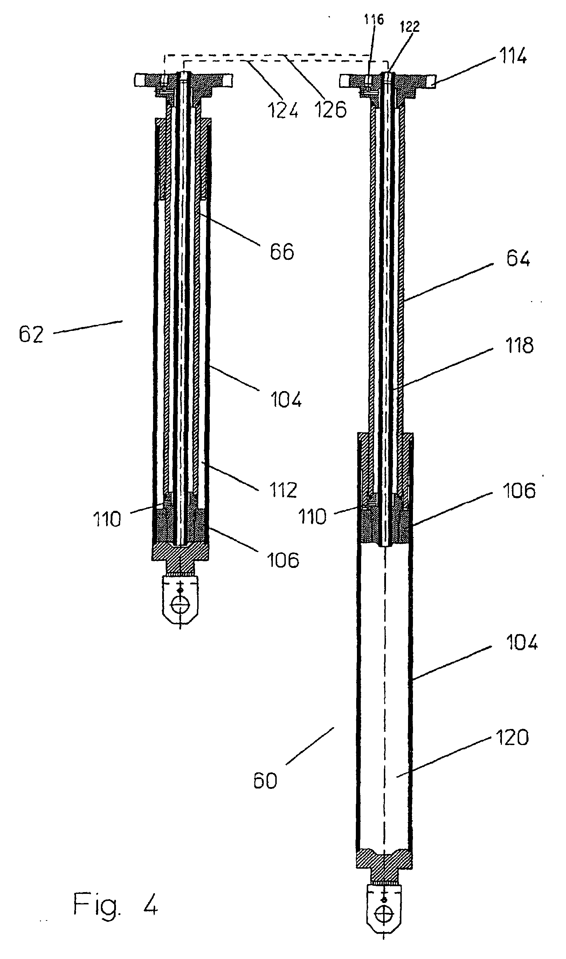

As Fig. 4 shows, the working cylinders 60, 62 respectively have a housing 104 in which a piston 106 moves. The piston rod 64, 66 is constructed as a hollow rod and communicates via a radial aperture 110 with an upper working chamber 112 of the working cylinder. The upper end of the hollow piston rod 64, 66 communicates via an angled-over passage formed in a mounting flange 114 connected to the piston rod with a connecting aperture 116.

Extending coaxially through the hollow piston rod 64, 66 is a feed tube 118 which opens out into the free end face of the piston 106 so communicating with a lower working chamber 120 of the working cylinder. Prepared at the upper end of the feed tube 118 is a connecting aperture 122.

As can be seen in Fig. 4, the upper working chambers 112 of the two working cylinders 60, 62 are connected to each other by a first coupling line 124. The lower working chambers 120 of the two working cylinders 60, 62 are connected by a second coupling line 126.

Thus, hydraulic fluid can be exchanged between the upper working chambers 112 of the two working cylinders 60, 62 and between their lower working chambers 120.

Consequently, a movement of the piston rod 64 leads to a precisely equal but oppositely directed movement of the piston rod 66 and vice versa.

The lifting columns 42, 43 therefore form a substitute for a pivotable front axle.

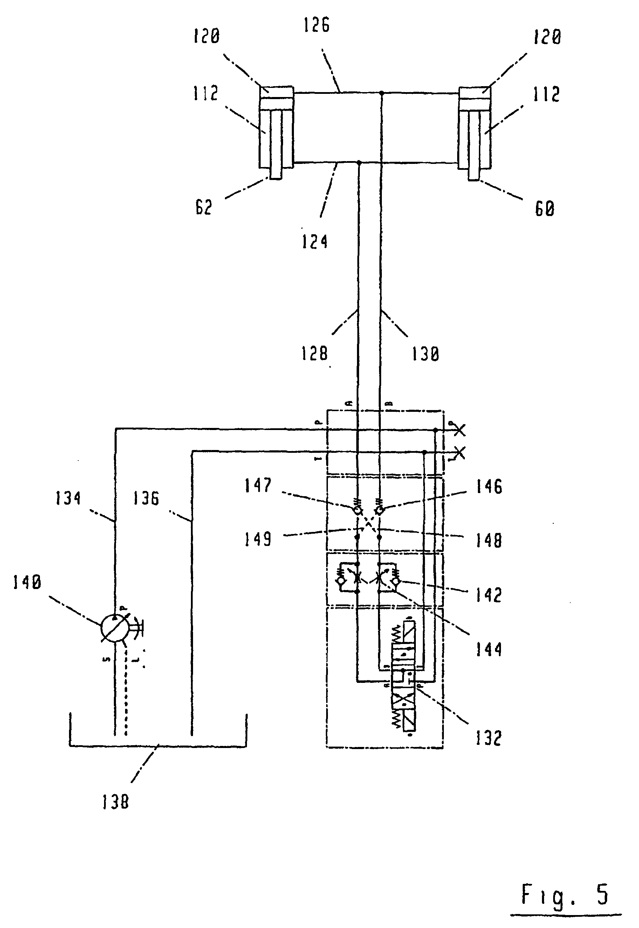

In the case of such a hydraulically floating front axle, in order at the same time to be able to make an adjustment to the height of the front end of the chassis frame, the two coupling lines 124, 126 are according to Fig. 5 connected by working lines 128, 130 to the working connections of a 4/3 magnetic valve 132. The inputs of this valve are connected to a pressure line 134 and/or a return line 136. This latter leads to a hydraulic fluid storage container 138.

A constant pressure hydraulic pump 140 draws fluid from the storage container 138. Its outlet is connected to the pressure line 134.

In order to guarantee that pressurised working fluid can flow to a working chamber without hindrance, but can only flow out of this when throttled, there is in each of the working lines 128, 130 a parallel circuit consisting of, opening in the direction of the working chamber and resiliently pre-tensioned in the closing position, a non-return valve 142 and an adjustable throttle 144.

Furthermore, incorporated into each of the working lines 128, 130 is a non-return valve 146, 147 which opens in the direction of the working chamber and is resiliently pre-tensioned into the closed position. The non-return valves 146 can in each case be positively moved into the open position by a hydraulic positioning motor 148, 149, whereby the positioning motor 148, 149 associated with a working line 128, 130 is controlled respectively by the pressure prevailing upstream of the non-return valve 147, 146 in the other working line 130, 128, as the drawings show.

Consequently, the non-return valves 146, 147, when in the inoperative state, take over the shut-off of the volume of fluid present as a whole in the lower working chambers 120 or upper working chambers 112 and so guarantee a constant height of the front end of the frame without the magnetic valve 132 having to be extremely leak-free. In the state of being opened by the application of pressurised fluid, they permit an adjustment of the height of the chassis frame according to the chosen working position of the magnetic valve.

The suspension shown in Fig. 5 for the two front wheels 26, 28 operates in the following way:

If the magnetic valve 132 is in the inoperative position, then hydraulic fluid is neither fed to nor removed from the working cylinders 60, 62. The equivalent working chambers of the two working cylinders 60, 62 are however able to exchange hydraulic fluid. Since the total quantity of available hydraulic fluid is predetermined but the hydraulic fluid is not compressible, then the two piston rods 64, 66 and thus also the wheel supports 48, 50 can only move by the same amounts and in opposite directions. Therefore, the result is a push-pull coupling without any need to provide mechanical coupling means in the space between the front wheels 26, 28. It is possible for a conveyor to extend through this space in order to carry away surfacing material which has been cut away.

When the magnetic valve 132 is in a bottom working position (lowering), the upper working chambers 112 of the working cylinders 60, 62 are supplied with an additional quantity of pressurised fluid (according to the period for which the magnetic valve 132 is open), but the housing 104 of moved upwardly and a corresponding quantity of pressurised fluid is conveyed to the return line 136 from the bottom working chambers 120 (via the non-return valve 147 which is positively opened by the pressure in the working line 128). Since the equivalent working chambers in the two working cylinders 60,62 are also connected by the coupling lines 124, 126 during supply and discharge of hydraulic fluid, there is superimposed on the reduction of the distance between chassis frame 10 and road surface which is obtained in the first working position of the magnetic valve a push-pull compensating movement, i.e. the front wheels 26, 28 are resting on the road surface over their entire width and with identical force.

In the second working position of the magnetic vale 132 (raised), there is in the same way as described in detail above a supply of pressurised fluid to the lower working chambers 120 while hydraulic fluid flows out of the upper working chambers to the return line 136. Thus, this front end of the chassis frame is raised. Also, once again, a push-pull movement of the two front wheels in a vertical direction may be superimposed on the raising movement if the contours of the road surface require it.

After the desired height of the front end of the chassis frame has been set, the magnetic valve 132 is again moved to its midway inoperative position in which the two non-return valves 146, 147 prevent any flow of hydraulic fluid out of the coupling lines 124, 126, so that once again only a push-pull movement of the wheel supports in a vertical direction by the same amounts and in opposite directions is possible. In other words: in the inoperative position of the magnetic valve 132, the front wheels 26, 28 are able to adapt to the road surface in a vertical direction whereby, however, the "midway point between axes" 46 and thus the height of the chassis frame 10 above the middle surface of the road remains unchanged.

During retraction and extension of the wheel supports by the working cylinders 60, 62, the two working cylinders remain, by virtue of the throttles 144, clamped between two oil-filled columns and their extension movement is damped. Upon lowering of the front end of the chassis frame, the throttles 144 damp the lowering movement so that in both directions of displacement it is possible to achieve a soft and precise adjustment of the. desired height.

Where the push-pull movements of the wheel supports 48, 50 are concerned, as with the height adjustment of the wheel supports, in order to guarantee constant steering conditions, the tongue-groove driving connection already described is provided between the steering rings 84, 86 and the guide rods 52, 54. The link rings 84, 86 are for their part rotatably mounted in axial bearing plates 150 which are rigidly mounted at the bottom end of the guide cylinders 56, 58 so that they are in a constant axial position. The axial relative position between the link rings 84, 86, the track rod 92 and the steering assisting working cylinder 98 is thus constant.

In the case of the modified embodiments which are now to be described, components which correspond functionally to above-described components are again identified by the same reference numerals and therefore these components do not need to be described again in detail hereinafter. Some of the components already mentioned are for the sake of greater clarity, also omitted from the drawings which are to be described hereinafter; it will be understood that they can equally well be provided there.

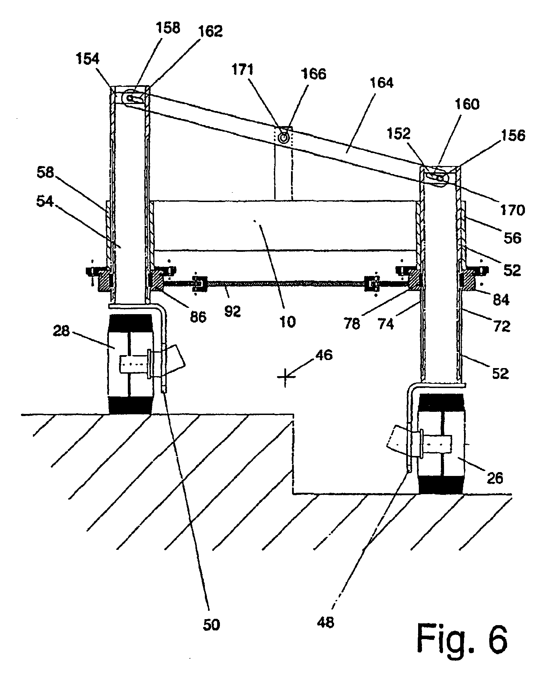

In the case of the front wheel suspension according to Fig. 6, rings 152, 154 are rotatably inserted in the upper ends of the guide rods 52, 54. These carry radially projecting entraining pins 156, 158 which run in entraining slots 160, 162 which are provided in the ends of a two-armed coupling lever 164. The coupling lever 164 is mounted in its centre on a hinge pin 166 mounted on a bearing block 168 which takes the form of an upside-down L and which is for its part carried by the chassis frame 10.

The entraining pins 156, 158 are respectively guided by circlips 170 on that end face of the coupling lever 164 which is in front in the drawings. A circlip 171 secures the coupling lever 164 on the hinge pin 166.

It is acknowledged that also with this type of front wheel suspension, the space between the front wheels is clear of incorporated parts and that the vertical displacement movements of the front wheels can only take place by like amounts and in opposite directions. Also in the case of the front wheel suspension according to Fig. 6, the guide cylinders 56, 58 serve at the same time as vertical guide parts and steering bearings.

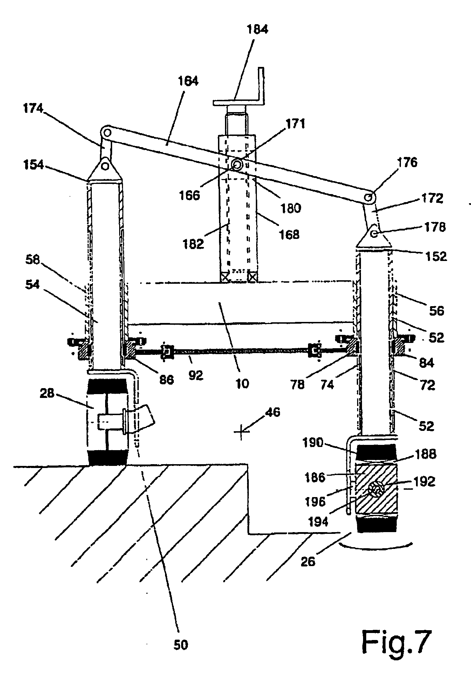

The embodiment shown in Fig. 7 corresponds substantially to that shown in Fig. 6, except that instead of the pin/slot connections between the ends of the coupling lever 164 and the ends of the guide rods 52, 54 there are entraining links 172, 174 which are articulatingly connected by hinge pins 176, 178 to the adjacent end of the coupling lever 64 and the end of the adjacent guide rod.

Where the embodiment according to Fig. 7 is concerned, it is furthermore envisaged for the horizontal arm of the L-shaped bearing block 168 to be constructed as a sliding member 180 guided on the vertical arm of the bearing block 168 and adjustable in height by a screw threaded spindle 182 by rotating a crank 184. In this way, the height of the front end of the chassis frame 10 above the road surface can be adjusted.

Furthermore, it is intended that the front wheels 26, 28 should be freely pivotable about an axis parallel with the longitudinal axis of the frame and which passes through its central point. To this end, hub bodies 186 which, through axial/radial bearings 188, support the bearing races 190 of the wheels, are mounted on a bearing pin 184 via a plain bearing bush 192. The bearing pin extends through the central point of the wheel and parallel with the longitudinal axis of the frame. The bearing pin 194 is in turn supported by a narrow carrier 196 disposed between hub body 186 and the bearing 188 and is connected to the associated wheel carrier. In this way, the front wheels 26, 28 can also adapt themselves to a portion of the road surface which is free from steps but which has a different transverse slope from that portion of road on which the rear wheels 30, 32 are running.

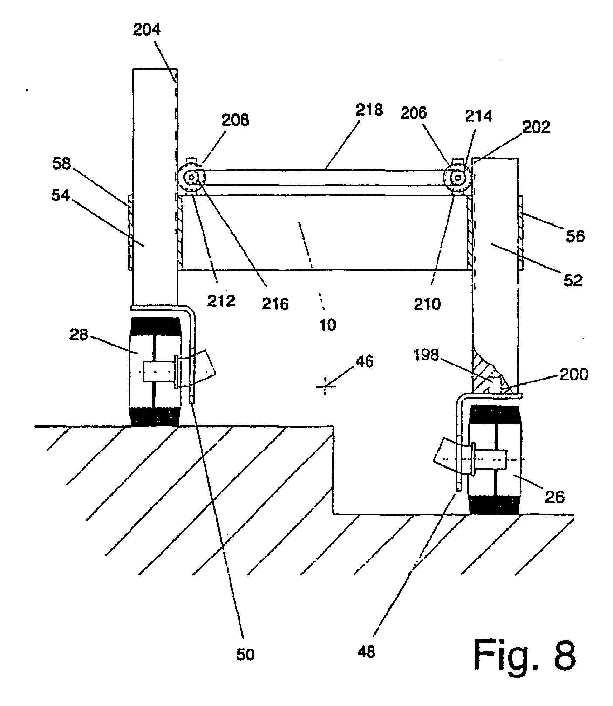

In the case of the embodiment shown in Fig. 8, the wheel supports 48, 50 are connected by hinge pins 198 and bores 200 constructed in the under side of the guide rods 52, 54 to be rotatable with the guide rods 52, 54 which in turn run in guide cylinders 56, 58 which are now non-rotatable. This can be guaranteed for example by the cross-sectional shape of guide rods and guide cylinders (e.g. square cross-section).

Constructed in the inwardly directed surface portions of the guide rods (52, 54) are racks 202, 204. Meshing with these are pinions 206,208 which are mounted on bearing plates 210, 212 which are rigid with the frame.

The pinions 206, 208 support sprockets 214, 216 over which runs a chain 218.

In this way, it is guaranteed that the front wheels are able to move by like amounts in opposite directions so that the front end of the chassis retains a predetermined and invariable distance above the road surface. The mechanical coupling shown in Fig. 8, between the two guide rods 52, 54, is of very small vertical bulk.

Instead of the chain transmission 214, 216, 218, it is also possible to use a belt transmission, e.g. a toothed belt transmission or a series of mutually meshing gear wheels.

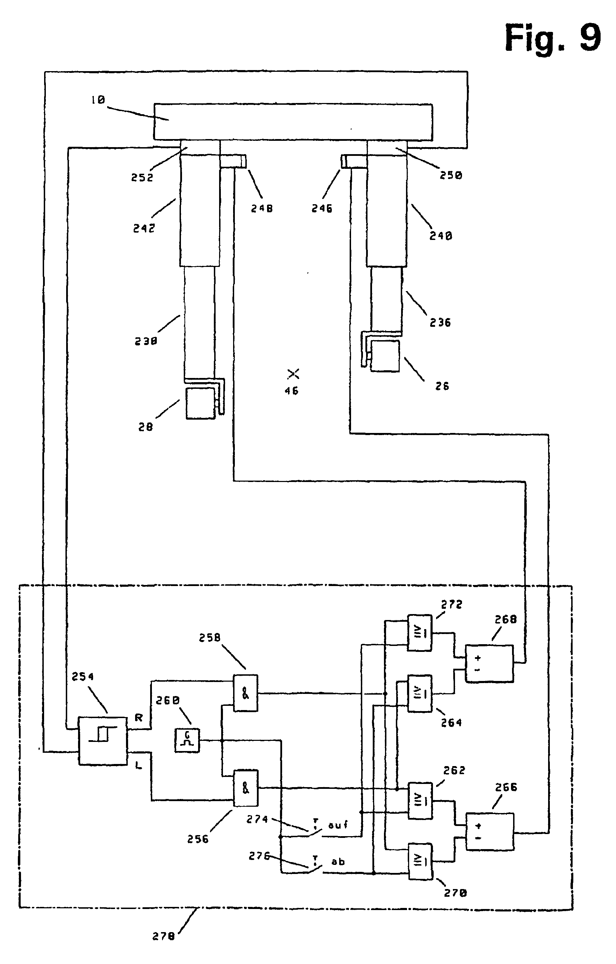

Where the above-described embodiments are concerned, the push-pull coupling of the vertical displacement movement of the two front wheels is effected by the interchange of mechanical forces. Fig. 9 shows an electrical positive coupling of the two displacement movements:

The wheel supports 48, 50 are disposed on the output parts 236, 238 of two struts of controllable length generally designated 240, 242. These may for example be spindle arrangements which are driven by respective stepping motors 246, 248.

The struts 240, 242 are braced on the under side of the chassis frame 10 via force sensors 250, 252.

The output signals from the two force sensors 250,252 are connected to the two inputs of a window discriminator 254. At a first output R, this generates an output signal when the output signal of the force sensor 252 associated with the right-side front wheel 28 is greater than the output signal of the force sensor 250 associated with the left-side front wheel 26 by at least a predetermined switching threshold **a**. On the other hand, if the output signal from the force sensor 250 is by at least the switching threshold **a** greater than the output signal from the force sensor 252, then the window discriminator 254 generates a signal at an output I. If the amount of the difference between the output signals is less than the switch threshold **a**, the window discriminator 254 does not generate an output signal at either output **R** or at output L.

The output L of the window discriminator 254 is connected to one input of an AND member 256, its output **R** is connected to an input of an AND member 258. Second inputs of the AND members 256, 258 are connected to the output of a clock generator 260 running at low frequency (e.g. 1 to 10 Hz).

The output of the AND member 256 is connected to the one inputs of two OR members 262, 264. The output of the OR member 262 is connected to a "-" input terminal of a control circuit 266 which controls the operation of the stepping motor 266 (sic!).

The output of the OR member 264 is connected to a "+" input terminal of a control circuit 268 which acts on the stepping motor 248.

The control circuits 266, 268 control the associated stepping motor when their "+" input terminal is in each case acted upon in the sense of increasing the length of the controllable strut, whereas when signals are applied to their "-" input terminal this causes the associated stepping motor to shorten the strut.

The output signal from the AND member 258 passes to the one inputs of two OR members 270, 272. The output from the OR member 270 is connected to the "+" input terminal of the control circuit 266; the output of the OR member 272 is connected to the "-" input of the control circuit 268.

The second inputs of the OR members 262, 272 are connected via a manually operable switch 274 to the output from the clock generator 260. Similarly, second inputs of the OR members are connected to the output of the clock generator 260 by a swtich 276.

The entire control unit for the struts 240, 242 is identified by reference numeral 278.

It is evident that by closing the switch 274 or the switch 276 the controllable struts 240, 242 can be extended or retracted by equal amounts so that there is a corresponding adjustment of the height of the front end of the chassis frame 10.

Both when the switches 274, 276 are closed and also when the switches 274, 276 are open is there in addition a push-pull triggering of the control circuits 266, 268 so that the struts 240, 242 alter their respective lengths on a push-pull basis so that the output signals from the force sensors 250, 252 become of equal magnitude. In this way, the push-pull positive synchronisation of the vertical displacement movement of the front wheels 26, 28 is guaranteed electrically.

## Claims

1. Chassis for a machine for stripping off road surfaces, particularly a small milling cutter, with a frame (10) supported by front wheels (26, 28) and rear wheels (30, 32), the front wheels (26, 28) being so suspended that they are able to follow variations in the transverse slope of the road surface in an opposite direction and by like amounts, and wheel supports (48, 50) for the front wheels (26, 28) which are connected to associated guides (52 to 58; 220, 222; 234, 234) which guide them respectively in a plane at right-angles to the frame plane (20) and parallel with the longitudinal axis of the frame and the movable guide parts (52, 54; 220, 234; 236, 238) for the front wheels being positively coupled by a coupling device (156 to 164; 166, 172, 174; 202 to 218; 224 to 230; 278) for the oppositely directed movement by the same amounts,
the coupling device comprising two identical working cylinders (60, 62) which have at least one pair of equivalent working chambers (112, 120) which are respectively connected by a coupling line (124, 126)
**characterized in that** the wheel supports (48, 50) are mounted on guide rods (52, 54) which respectively and rotatably run in associated guide parts (56, 58) and are connected to link rings (84, 86) to be axially displaceable but rotationally locked, the axes of the guide parts (56, 58) being at right-angles to the frame plane (20),
that the two link rings (84, 86) lie in a plane parallel with the plane (20) of the frame and are fixed in a direction at right-angles to the frame-plane (20) but rotatable about their vertical axis, and
that the link rings (84, 86) are mounted on the fixed guide parts (56, 58) to be rigid in the direction of right-angles to the frame-plane (20) so that a track rod (92) connecting the link rings (84, 86) is always parallel with the frame-plane (20) even when the guide parts (52, 54) are extended by different amounts.

2. Chassis according to claim 1, **characterised in that** the central vertical position of the movable guide parts (52, 54; 220, 234; 236, 238) is adjustable.

3. Chassis according to claim 1, **characterised in that** the working cylinders (60, 62) are double-acting working cylinders and have their equivalent working chambers (112, 120) connected by respective coupling lines (124, 126).

4. Chassis according to claim 1 or 3, **characterised in that** the coupling lines (124, 126) can be connected by working lines (128, 130) and a control valve (132) to a pressurised fluid source (140) or pressurised medium sump (138).

5. Chassis according to claim 4, **characterized in that** the working lines (128, 130) each contain a parallel circuit consisting of a throttle (144) and a non-return valve (142) opening in the direction of the associated coupling line (124, 126).

6. Chassis according to claim 4 or 5 in conjunction with claim 3, **characterized in that** the working lines (128, 130) comprise, opening in the direction of the associated coupling line (124, 126), a non-return valve (146, 147) which can be positively opened by a positioning motor (148, 149) which is actuated by the pressure prevailing in whichever is the other working line (130, 128) and upstream of the non-return valve (147, 146).

7. Chassis according to one of claims 1 or 4 to 6, **characterized in that** the working cylinders (60, 62) have at the top end of their piston rods (64, 66) a mounting flange (114) by which they are fixed to the top end of the associated fixed guide part (56, 58).

8. Chassis according to one of claims 1 or 3 to 7, **characterized in that** the fluid connecting apertures (116, 122) of the working cylinders (60, 62) are disposed at the end face of the piston rod (64, 66) which is remote form the piston (106) and **in that** the fluid is applied to the two working chambers of the working cylinders (60, 62) via the piston rod (64, 66) for which purpose there is inside each piston rod a feed tube (118) which extends through the piston (106) of the working cylinder (60, 62) in question while the annular space between piston rod (64, 66) and feed tube (118) communicates (110) with the working chamber of the respective working cylinder (62, 64) which is disposed behind the piston (106).

9. Chassis for a machine for stripping off road surfaces, particularly a small milling cutter, with a frame (10) supported by front wheels (26, 28) and rear wheels (30, 32), the front wheels (26, 28) being so suspended that they are able to follow variations in the transverse slope of the road surface in an opposite direction and by like amounts, and wheel supports (48, 50) for the front wheels (26, 28) which are connected to associated guides (52 to 58; 220, 222; 234, 234) which guide them respectively in a plane at right-angles to the frame plane (20) and parallel with the longitudinal axis of the frame and the movable guide parts (52, 54; 220, 234; 236, 238) for the front wheels being positively coupled by a coupling device (156 to 164; 166, 172, 174; 202 to 218; 224 to 230; 278) for the oppositely directed movement by the same amounts,
the coupling device comprising a coupling lever (164) pivotable about an axis (166) parallel with the frame plane (20) and the ends of which are connected to the movable guide parts (52, 54) by means of entraining couplings (156 to 162) which transmit force in the working direction of the guides (52, 58) while being inoperative in a direction at right-angles thereto,
**characterized in that** the wheel supports (48, 50) are mounted on guide rods (52, 54) which respectively and rotatably run in associated guide parts (56, 58) and are connected to link rings (84, 86) to be axially displaceable but rotationally locked, the axes of the guide parts (56, 58) being at right-angles to the frame plane (20),
that the two link rings (84, 86) lie in a plane parallel with the plane (20) of the frame and are fixed in a direction at right-angles to the frame-plane (20) but rotatable about their vertical axis, and
that the link rings (84, 86) are mounted on the fixed guide parts (56, 58) to be rigid in the direction of right-angles to the frame-plane (20) so that a track rod (92) connecting the link rings (84, 86) is always parallel with the frame-plane (20) even when the guide parts (52, 54) are extended by different amounts.

10. Chassis according to claim 9, **characterized in that** the unidirectional entraining couplings are constituted by entraining slots (160, 162) extending in the longitudinal direction of the coupling lever (164) and entraining pins (156, 158) running in the said slots and supported by the movable guide parts (52, 54).

11. Chassis according to claim 9, **characterized in that** the uni-directional entraining couplings comprise entraining link members (172, 174) of which one end is articulatingly connected to the neighbouring end of the coupling lever (164) while the other end is articulatingly connected to the neighbouring movable guide part (52, 54).

12. Chassis according to one of claims 9 to 11, **characterized in that** the ends of the movable guide parts (52, 54) which are remote from the wheels each carry an axial bearing (152, 154) by which the unidirectional entraining coupling (156 to 162; 172, 174) engages the movable guide part (52, 54).

13. Chassis for a machine for stripping off road surfaces, particularly a small milling cutter, with a frame (10) supported by front wheels (26, 28) and rear wheels (30, 32), the front wheels (26, 28) being so suspended that they are able to follow variations in the transverse slope of the road surface in an opposite direction and by like amounts, and wheel supports (48, 50) for the front wheels (26, 28) which are connected to associated guides (52 to 58; 220, 222; 234, 234) which guide them respectively in a plane at right-angles to the frame plane (20) and parallel with the longitudinal axis of the frame and the movable guide parts (52, 54; 220, 234; 236, 238) for the front wheels being positively coupled by a coupling device (156 to 164; 166, 172, 174; 202 to 218; 224 to 230; 278) for the oppositely directed movement by the same amounts,
the coupling device comprising, mounted rotatably on the frame, two pinions (206, 208) each of which co-operates with a tooth arrangement (202, 204) which is jointly moved by the movable guide part (52, 54; 234) and in that between these two pinions (206, 208) there is a torque transmitting device (214 to 218),
**characterized in that** the wheel supports (48, 50) are mounted on guide rods (52, 54) which respectively and rotatably run in associated guide parts (56, 58) and are connected to link rings (84, 86) to be axially displaceable but rotationally locked, the axes of the guide parts (56, 58) being at right-angles to the frame plane (20),
that the two link rings (84, 86) lie in a plane parallel with the plane (20) of the frame and are fixed in a direction at right-angles to the frame-plane (20) but rotatable about their vertical axis, and
that the link rings (84, 86) are mounted on the fixed guide parts (56, 58) to be rigid in the direction of right-angles to the frame-plane (20) so that a track rod (92) connecting the link rings (84, 86) is always parallel with the frame-plane (20) even when the guide parts (52, 54) are extended by different amounts.

14. Chassis according to claims 13, **characterized in that** the torque transmitting device comprises a chain transmission (214 to 218), a belt transmission or a geared control cable.

15. Chassis for a machine for stripping off road surfaces, particularly a small milling cutter, with a frame (10) supported by front wheels (26, 28) and rear wheels (30, 32), the front wheels (26, 28) being so suspended that they are able to follow variations in the transverse slope of the road surface in an opposite direction and by like amounts, and wheel supports (48, 50) for the front wheels (26, 28) which are connected to associated guides (52 to 58; 220, 222; 234, 234) which guide them respectively in a plane at right-angles to the frame plane (20) and parallel with the longitudinal axis of the frame and the movable guide parts (52, 54; 220, 234; 236, 238) for the front wheels being positively coupled by a coupling device (156 to 164; 166, 172, 174; 202 to 218; 224 to 230; 278) for the oppositely directed movement by the same amounts,
**characterized in that** the coupling device comprises: two force sensors (250, 252) and, connected mechanically in series with these latter, two struts (240, 242) which can be controlled in their length, the wheel supports (48, 50) being supported on the frame (10) by means of this series circuit, and a control unit (278) which is subject to the output signals from the two force sensors (250, 252) and which so trigger the struts (240, 242) which are controllable in their length according to the difference between these output signals that their length is varied by like amounts and in the opposite direction while at the same time the output signals from the two force sensors (250, 252) become of equal magnitude.

16. Chassis according to one of claims 1 to 15, **characterized in that** the wheel supports (48, 50) are mounted on link members (220, 234) which are mounted on the frame (10) to be pivotal about axes (222, 235) which are at right-angles to the central plane through the frame.

17. Chassis according to one of claims 1 to 16, **characterized in that** the wheel supports (48, 50) are mounted on guide rods (52, 54) which run in guide cylinders (56, 58) the axis of which is at right-angles to the frame plane (20).

18. Chassis according to claim 17, **characterized in that** the guide rods (52, 54) respectively and rotatably run in associated guide cylinders (56, 58) and are connected to link rings (84, 86) to be axially displaceable but rotationally locked.

19. Chassis according to claim 18, **characterized in that** the two link rings (84, 86) lie in a plane parallel with the plane (20) of the frame and are fixed in a direction at right-angles to the frame-plane (20).

20. Chassis according to claim 19, **characterized in that** the link rings (84, 86) are mounted on the fixed guide parts (56, 58) to be rigid in the direction of right-angles to the frame plane (20) so that the track rod (92) is always parallel with the frame plane (20) even when the guide parts (52, 54) are extended by different amounts.

21. Chassis according to claim 20, **characterized in that** the link rings (84) are mounted by a form-locking connection to axial bearing plates (150) mounted on the fixed guide parts (56, 58) to be rigid but rotatable about their vertical axis.

## Patentansprüche

1. Fahrwerk für eine Maschine zum Abfräsen von Straßenbelägen, insbesondere ein Kleinfräser, mit einem von Vorderrädern (26, 28) und Hinterrädern (30, 32) getragenen Rahmen (10), wobei die Vorderräder (26, 28) so aufgehängt sind, dass sie Änderungen in der Querneigung des Straßenbelags gegensinnig und in gleichem Masse folgen können, und mit Radträgern (48, 50) für die Vorderräder (26, 28), die mit zugeordneten Führungen (52 bis 58; 220, 222; 234, 234) verbunden sind, welche die Radträger jeweils in einer rechtwinklig zur Rahmenebene (20) und parallel zur Rahmenlängsachse verlaufenden Ebene führen, und wobei die beweglichen Führungsteile (52, 54; 220, 234; 236, 238) für die Vorderräder über eine Kopplungsvorrichtung (156 bis 164; 166, 172, 174; 202 bis 218; 224 bis 230; 278) für die entgegengesetzt gerichtete Bewegung um gleiche Beträge formschlüssig miteinander verbunden sind, wobei die Kopplungsvorrichtung zwei identische Arbeitszylinder (60, 62) umfasst, welche zumindest ein Paar gleicher Arbeitskammern (112, 120) aufweisen, die jeweils zumindest über eine Verbindungsleitung (124, 126) miteinander verbunden sind,
**dadurch gekennzeichnet, dass** die Radträger (48, 50) auf Führungsstangen (52, 54) angebracht sind, welche jeweils drehbar in zugeordneten Führungsteilen (56, 58) laufen und mit Verbindungsringen ( 84, 86) verbunden sind, damit sie axial verschiebbar, aber drehschlüssig sind, wobei die Achsen der Führungsteile (56, 58) rechtwinklig auf der Rahmenebene (20) stehen,
dass die beiden Verbindungsringe (84, 86) in einer zur Rahmenebene (20) parallelen Ebene liegen und in zur Rahmenebene (20) rechtwinkliger Richtung feststehend, aber um ihre senkrechte Achse drehbar sind, und dass die Verbindungsringe (84, 86) in zur Rahmenebene (20) rechtwinkliger Richtung feststehend an den befestigten Führungsteilen (56, 58) angebracht sind, so dass ein die Verbindungsringe (84, 86) verbindendes Spurgestänge (92) auch bei unterschiedlich weit ausgefahrenen Führungsteilen (52, 54) immer parallel zur Rahmenebene (20) steht.

2. Fahrwerk nach Anspruch 1, **dadurch gekennzeichnet, dass** die zentrale senkrechte Stellung der beweglichen Führungsteile (52, 54; 220, 234; 236, 238) einstellbar ist.

3. Fahrwerk nach Anspruch 1, **dadurch gekennzeichnet, dass** die Arbeitszylinder (60, 62) doppelt wirkende Arbeitszylinder sind und ihre äquivalenten Arbeitskammem (112, 120) über entsprechende Koppelleitungen (124, 126) verbunden sind.

4. Fahrwerk nach Anspruch 1 oder 3, **dadurch gekennzeichnet, dass** die Koppelleitungen (124, 126) über Arbeitsleitungen (128, 130) und ein Steuerventil (132) mit einer Druckfluidquelle (140) oder einem Druckmittelsumpf (138) verbunden werden können.

5. Fahrwerk nach Anspruch 4, **dadurch gekennzeichnet, dass** die Arbeitsleitungen (128, 130) jeweils eine Parallelschaltung aus einer Drossel (144) und einem in Richtung zur zugeordneten Koppelleitung (124, 126) öffnenden Rückschlagventil (142) aufweisen.

6. Fahrwerk nach Anspruch 4 oder 5 in Verbindung mit Anspruch 3, **dadurch gekennzeichnet, dass** die Arbeitsleitungen (128, 130) ein in Richtung zur zugeordneten Koppelleitung (124, 126) öffnendes Rückschlagventil (146, 147) aufweisen, welches sich durch einen Stellmotor (148, 149) zwangsöffnen lässt, der durch den in der jeweils anderen Arbeitsleitung (130, 128) stromauf zum Rückschlagventil (147, 146) herrschenden Druck betätigt wird.

7. Fahrwerk nach einem der Ansprüche 1 oder 4 bis 6, **dadurch gekennzeichnet, dass** die Arbeitszylinder (60, 62) am oberen Ende ihrer Kolbenstangen (64, 66) jeweils einen Montageflansch aufweisen, mit welchem sie am oberen Ende des zugeordneten feststehenden Führungsteils (56, 58) befestigt sind.

8. Fahrwerk nach einem der Ansprüche 1 oder 3 bis 7, **dadurch gekennzeichnet, dass** die Fluid-Anschlussöffnungen (116, 122) der Arbeitszylinder (60, 62) an der vom Kolben (106) beabstandeten Stirnseite ihrer Kolbenstange (64, 66) angeordnet sind und die beiden Arbeitskammern des Arbeitszylinders (60, 62) über die Kolbenstange (64, 66) mit Fluid beaufschlagt werden, wofür im Innern der Kolbenstangen jeweils ein Zuführungsrohr (118) vorgesehen ist, welches durch den Kolben (106) des betreffenden Arbeitszylinders (60, 62) hindurchgeführt ist, während der zwischen der Kolbenstange (64, 66) und dem Zuführungsrohr (118) befindliche ringförmige Raum mit dem hinter dem Kolben (106) liegenden Arbeitsraum des betreffenden Arbeitszylinders (62, 64) in Verbindung (110) steht.

9. Fahrwerk für eine Maschine zum Abfräsen von Straßenbelägen, insbesondere ein Kleinfräser, mit einem von Vorderrädern (26, 28) und Hinterrädern (30, 32) getragenen Rahmen (10), wobei die Vorderräder (26, 28) so aufgehängt sind, dass sie Änderungen in der Querneigung des Straßenbelags gegensinnig und im gleichen Ausmaß folgen können, und mit Radträgern (48, 50) für die Vorderräder (26, 28), die mit zugeordneten Führungen (52 bis 58; 220, 222; 234, 234) verbunden sind, welche die Radträger jeweils in einer rechtwinklig zur Rahmenebene (20) und parallel zur Rahmenlängsachse verlaufenden Ebene führen, und wobei die beweglichen Führungsteile (52, 54; 220, 234; 236, 238) für die Vorderräder über eine Kopplungsvorrichtung (156 bis 164; 166, 172, 174; 202 bis 218; 224 bis 230; 278) für die entgegengesetzt gerichtete Bewegung um gleiche Beträge formschlüssig verbunden sind, wobei die Koppelvorrichtung einen Kopplungshebel (164) aufweist, der um eine parallel zur Rahmenebene (20) ausgerichtete Achse (166) drehbar ist und dessen Enden mit den beweglichen Führungsteilen (52, 54) über Mitnahmekupplungen (156 bis 162) verbunden sind, welche Kraft in Arbeitsrichtung der Führungen (52, 58) übertragen, während sie in rechtwinkliger Richtung hierzu nicht funktionsfähig sind,
**dadurch gekennzeichnet, dass** die Radträger (48, 50) auf Führungsstangen (52, 54) angebracht sind, welche jeweils drehbar in zugeordneten Führungsteilen (56, 58) laufen und mit Verbindungsringen ( 84, 86) verbunden sind, damit sie axial verschiebbar, aber drehschlüssig sind, wobei die Achsen der Führungsteile (56, 58) rechtwinklig auf der Rahmenebene (20) stehen,
dass die beiden Verbindungsringe (84, 86) in einer zur Rahmenebene (20) parallelen Ebene liegen und in zur Rahmenebene (20) rechtwinkliger Richtung feststehend, aber um ihre senkrechte Achse drehbar sind, und
dass die Verbindungsringe (84, 86) in zur Rahmenebene (20) rechtwinkliger Richtung feststehend an den befestigten Führungsteilen (56, 58) angebracht sind, so dass ein die Verbindungsringe (84, 86) verbindendes Spurgestänge (92) auch bei unterschiedlich weit ausgefahrenen Führungsteilen (52, 54) immer parallel zur Rahmenebene (20) steht.

10. Fahrwerk nach Anspruch 9, **dadurch gekennzeichnet, dass** die in einer Richtung wirkenden Mitnahmekupplungen von in Längsrichtung des Koppelhebels (164) verlaufenden Mitnahmeschlitzen (160, 162) und von in diesen Schlitzen laufenden, von den beweglichen Führungsteilen (52, 54) getragenen Mitnahmestiften (156, 158) gebildet sind.

11. Fahrwerk nach Anspruch 9, **dadurch gekennzeichnet, dass** die in einer Richtung wirkenden Mitnahmekupplungen Mitnahme-Verbindungsglieder (172, 174) aufweisen, deren eines Ende mit dem benachbarten Ende des Koppelhebels (164) eine Gelenkverbindung eingeht, während deren anderes Ende mit dem benachbarten beweglichen Führungsteil (52, 54) eine Gelenkverbindung eingeht.

12. Fahrwerk nach einem der Ansprüche 9 bis 11, **dadurch gekennzeichnet, dass** die von den Rädern beabstandeten Enden der beweglichen Führungsteile (52, 54) jeweils ein axiales Lager (152, 154) tragen, über welches die in eine Richtung wirkende Mitnahmekupplung (156 bis 162; 172, 174) in den beweglichen Führungsteil (52, 54) eingreift.

13. Fahrwerk für eine Maschine zum Abfräsen von Straßenbelägen, insbesondere ein Kleinfräser, mit einem von Vorderrädern (26, 28) und Hinterrädern (30, 32) getragenen Rahmen (10), wobei die Vorderräder (26, 28) so aufgehängt sind, dass sie Änderungen in der Querneigung des Straßenbelags gegensinnig und im gleichem Ausmaß folgen können, und mit Radträgern (48, 50) für die Vorderräder (26, 28), die mit zugeordneten Führungen (52 bis 58; 220, 222; 234, 234) verbunden sind, welche die Radträger jeweils in einer rechtwinklig zur Rahmenebene (20) und parallel zur Rahmenlängsachse verlaufenden Ebene führen, und wobei die beweglichen Führungsteile (52, 54; 220, 234; 236, 238) für die Vorderräder über eine Kopplungsvorrichtung (156 bis 164; 166, 172, 174; 202 bis 218; 224 bis 230; 278) für die entgegengesetzt gerichtete Bewegung um gleiche Beträge formschlüssig verbunden sind, wobei die Kopplungsvorrichtung zwei drehbar am Rahmen gelagerte Ritzel (206, 208) aufweist, die jeweils mit einer vom beweglichen Führungsteil (52, 54; 234) mitbewegten Zahnanordnung (202, 204) zusammenarbeitet, und dass zwischen diesen beiden Ritzeln (206, 208) eine Drehmomentübertragungseinrichtung (214 bis 218) angeordnet ist,
**dadurch gekennzeichnet, dass** die Radträger (48, 50) auf Führungsstangen (52, 54) angebracht sind, welche jeweils drehbar in zugeordneten Führungsteilen (56, 58) laufen und mit Verbindungsringen ( 84, 86) verbunden sind, damit sie axial verschiebbar, aber drehschlüssig sind, wobei die Achsen der Führungsteile (56, 58) rechtwinklig auf der Rahmenebene (20) stehen,
dass die beiden Verbindungsringe (84, 86) in einer zur Rahmenebene (20) parallelen Ebene liegen und in zur Rahmenebene (20) rechtwinkliger Richtung feststehend, aber um ihre senkrechte Achse drehbar sind, und
dass die Verbindungsringe (84, 86) in zur Rahmenebene (20) rechtwinkliger Richtung feststehend an den befestigten Führungsteilen (56, 58) angebracht sind, so dass ein die Verbindungsringe (84, 86) verbindendes Spurgestänge (92) auch bei unterschiedlich weit ausgefahrenen Führungsteilen (52, 54) immer parallel zur Rahmenebene (20) steht.

14. Fahrwerk nach Anspruch 13, **dadurch gekennzeichnet, dass** die Drehmomentübertragungseinrichtung einen Kettentrieb (214 bis 218), einen Riementrieb oder einen Zahnradzug aufweist.

15. Fahrwerk für eine Maschine zum Abfräsen von Straßenbelägen, insbesondere ein Kleinfräser, mit einem von Vorderrädern (26, 28) und Hinterrädern (30, 32) getragenen Rahmen (10), wobei die Vorderräder (26, 28) so aufgehängt sind, dass sie Änderungen in der Quemeigung des Straßenbelags gegensinnig und im gleichen Ausmaß folgen können, und mit Radträgern (48, 50) für die Vorderräder (26, 28), die mit zugeordneten Führungen (52 bis 58; 220, 222; 234, 234) verbunden sind, welche die Radträger jeweils in einer rechtwinklig zur Rahmenebene (20) und parallel zur Rahmenlängsachse verlaufenden Ebene führen, und wobei die beweglichen Führungsteile (52, 54; 220, 234; 236, 238) für die Vorderräder über eine Kopplungsvorrichtung (156 bis 164; 166, 172, 174; 202 bis 218; 224 bis 230; 278) für die entgegengesetzt gerichtete Bewegung um gleiche Beträge formschlüssig verbunden sind,
**dadurch gekennzeichnet, dass** die Kopplungsvorrichtung zwei Kraftfühler (250, 252) und zwei mit diesen mechanisch in Reihe geschaltete, in ihrer Länge steuerbare Streben (240,242) aufweist, wobei die Radträger (48, 50) mittels dieser Serienschaltung am Rahmen (10) abgestützt sind, sowie eine Steuereinheit (278), welche die Ausgangssignale der beiden Kraftfühler empfängt und anhand der Differenz dieser Ausgangssignale die in ihrer Länge steuerbaren Streben (240, 242) so ansteuern, dass die Länge derselben in Gegenrichtung um gleiche Beträge geändert werden und gleichzeitig die Ausgangssignale der beiden Kraftfühler (250, 252) gleich groß werden.

16. Fahrwerk nach einem der Ansprüche 1 bis 15, **dadurch gekennzeichnet, dass** die Radträger (48, 50) an Verbindungsgliedern (220, 234) angebracht sind, welche zum Drehen um rechtwinklig zu der durch den Rahmen verlaufenden Zentralebene gelegene Achsen (222, 235) auf dem Rahmen (10) montiert sind

17. Fahrwerk nach einem der Ansprüche 1 bis 16, **dadurch gekennzeichnet, dass** die Rahmenträger (48, 50) auf Führungsstangen (52, 54) angebracht sind, welche in Führungszylindern (56, 58) laufen, deren Achse senkrecht auf der Rahmenebene (20) steht.

18. Fahrwerk nach Anspruch 17, **dadurch gekennzeichnet, dass** die Führungsstangen (52, 54) jeweils drehbar in zugeordneten Führungszylindern (56, 58) laufen und mit Verbindungsringen ( 84, 86) verbunden sind, damit sie axial verschiebbar, aber drehschlüssig sind.

19. Fahrwerk nach Anspruch 18, **dadurch gekennzeichnet, dass** die beiden Verbindungsringe (84, 86) in einer zur Rahmenebene (20) parallelen Ebene liegen und in zur Rahmenebene (20) senkrechter Richtung feststehend sind.

20. Fahrwerk nach Anspruch 19, **dadurch gekennzeichnet, dass** die Verbindungsringe (84, 86) in zur Rahmenebene (20) senkrechter Richtung feststehend an den befestigten Führungsteilen (56, 58) angebracht sind, so dass das Spurgestänge (88, 92) auch bei unterschiedlich weit ausgefahrenen Führungsteilen (52, 54) immer parallel zur Rahmenebene (20) steht.

21. Fahrwerk nach Anspruch 20, **dadurch gekennzeichnet, dass** die Verbindungsringe (84) über eine Formschlussverbindung mit an den feststehenden Führungsteilen (56, 58) angebrachten axialen Lagerplatten (150) feststehend, jedoch um ihre vertikale Achse drehbar angebracht sind.

## Revendications

1. Châssis de machine destinée au rabotage de surfaces routières, en particulier un petit outil de fraisage, avec un cadre (10) supporté par des roues avant (26, 28) et des roues arrière (30, 32), les roues avant (26, 28) étant suspendues de manière à être aptes à suivre des variations de la pente transversale de la surface routière dans une direction opposée et selon des valeurs similaires, et des supports de roue (48, 50) pour les roues avant (26, 28) qui sont reliés à des dispositifs de guidage associés (52 à 58; 220, 222; 234, 234) qui les guident respectivement dans un plan à angle droit par rapport au plan du châssis (20) et parallèles à l'axe longitudinal du châssis et des parties de guidage mobiles (52, 54; 220, 234; 236, 238) pour les roues avant couplées de manière positive à un dispositif de couplage (156 à 164; 166, 172, 174; 202 à 218; 224 à 230; 278) pour le mouvement dirigé de manière opposée selon les mêmes valeurs,
le dispositif de couplage comprenant deux cylindres moteurs identiques (60, 62) qui comportent au moins une paire de chambres motrices équivalentes (112, 120) respectivement reliées par une ligne de couplage (124, 126),
**caractérisé en ce que** les supports de roues (48, 50) sont montés sur des tiges de guidage (52, 54) qui s'étendent respectivement et de manière rotative dans des éléments de guidage associés (56, 58) et sont reliées à des anneaux de liaison (84, 86) pour être mobiles axialement mais verrouillées en rotation, les axes des parties de guidage (56, 58) étant à angle droit par rapport au plan du châssis (20),
**en ce que** les deux anneaux de liaison (84, 86) s'étendent dans un plan parallèle au plan (20) du châssis et sont fixés dans une direction qui se trouve à angle droit par rapport au plan du châssis (20) mais peuvent tourner autour de leur axe vertical, et
**en ce que** les anneaux de liaison (84, 86) sont montés sur les parties de guidage fixes (54, 58) de manière à être rigides dans la direction se trouvant à angle droit par rapport au plan du châssis (20) de telle sorte qu'une tige de couplage (92) reliant les anneaux de liaison soit toujours parallèle au plan du châssis (20), même lorsque les parties de guidage (52, 54) s'étendent selon des valeurs différentes.

2. Châssis selon la revendication 1, **caractérisé en ce que** la position verticale centrale des parties de guidage mobiles (52, 54; 220, 234; 236, 238) est réglable.

3. Châssis selon la revendication 1, **caractérisé en ce que** les cylindres moteurs (60, 62) sont des cylindres moteurs à double effet et ont leurs chambres motrices équivalentes (112, 120) reliées respectivement par des lignes de couplage (124, 126).

4. Châssis selon la revendication 1 ou 3, **caractérisé en ce que** les lignes de couplage (124, 126) peuvent être reliées par des lignes motrices (128, 130) et une soupape de commande (132) à une source de fluide sous pression (140) ou à un carter à milieu sous pression (138).

5. Châssis selon la revendication 4, **caractérisé en ce que** les lignes motrices (128, 130) contiennent chacune un circuit parallèle se composant d'un obturateur (144) et d'une soupape de retenue (142) s'ouvrant dans la direction de la ligne de couplage associée (124, 126).

6. Châssis selon la revendication 4 ou 5 conjointement avec la revendication 3, **caractérisé en ce que** les lignes motrices (128, 130) comprennent une soupape de retenue (147, 147) s'ouvrant dans la direction de la ligne de couplage associée (124, 126), laquelle soupape de retenue peut être ouverte de manière positive par un moteur de positionnement (148, 149) qui est actionné par la pression régnant dans la n'importe quelle autre ligne motrice (130, 128) et en amont de la soupape de retenue (147, 146).

7. Châssis selon l'une quelconque des revendications 1 à 4 ou 6, **caractérisé en ce que** les cylindres moteurs (60, 62) comprennent, au niveau de l'extrémité supérieure de leurs tiges de piston (64, 66), une bride de fixation (114) grâce à laquelle elles sont fixées à l'extrémité supérieure de la partie de guidage fixe associée (56, 58).

8. Châssis selon l'une quelconque des revendications 1 à 3 ou 7, **caractérisé en ce que** les ouvertures de liaison fluidique (116, 122) des cylindres moteurs (60, 62) sont disposées au niveau de la face d'extrémité de la tige de piston (64, 66) qui est éloignée du piston (106) et **en ce que** le fluide est appliqué aux deux chambres motrices des cylindres moteurs (60, 62) par l'intermédiaire de la tige de piston (64, 66), et, dans ce but, un tube d'alimentation (118) se trouve à l'intérieur de chaque tige de piston, lequel tube d'alimentation s'étend à travers le piston (106) du cylindre moteur (60, 62) en question tandis que l'espace annulaire entre la tige de piston (64, 66) et le tube d'alimentation (118) communique (110) avec la chambre de travail du cylindre de travail respectif (62, 64) qui est disposée derrière le piston (106).

9. Châssis de machine destinée au rabotage de surfaces routière, en particulier un petit outil de fraisage, avec un châssis (10) supporté par des roues avant (26, 28) et des roues arrière (30, 32), les roues avant (26, 28) étant suspendues de manière à être aptes à suivre les variations de la pente transversale de la surface routière dans une direction opposée et selon des valeurs similaires, et des supports de roue (48, 50) pour les roues avant (26, 28) qui sont reliés à des dispositifs de guidage associés (52 à 58; 220, 222; 234, 234) qui les guident respectivement dans un plan à angle droit par rapport au plan du châssis (20) et parallèles à l'axe longitudinal du châssis et des parties de guidage mobiles (52, 54; 220, 234; 236, 238) pour les roues avant étant couplées de manière positive à un dispositif de couplage (156 à 164; 166, 172, 174; 202 à 218; 224 à 230; 278) pour le mouvement dirigé de manière opposée selon les mêmes valeurs,
le dispositif de couplage comprenant un levier de couplage (164) pouvant pivoter autour d'un axe (166) parallèle au plan du châssis (20) et dont les extrémités sont reliées aux parties de guidage mobiles (52, 54) au moyen de couplage d'entraînement (156 à 162) qui transmettent la force dans la direction motrice des dispositifs de guidage (52, 58) tout en étant sans effet dans une direction perpendiculaire par rapport à cette dernière,
**caractérisé en ce que** les supports de roues (48, 50) sont montés sur des tiges de guidage (52, 54) qui s'étendent respectivement et de manière rotative dans des cylindres de guidage associés (56, 58) et sont reliées à des anneaux de liaison (84, 86) pour être mobiles axialement mais verrouillées en rotation, les axes des parties de guidage (56, 58) se trouvant à angle droit par rapport au plan du châssis (20),
**en ce que** les deux anneaux de liaison (84, 86) s'étendent dans un plan parallèle au plan (20) du châssis et sont fixés dans une direction qui se trouve à angle droit par rapport au plan du châssis (20) mais peuvent tourner autour de leur axe vertical, et
**en ce que** les anneaux de liaison (84, 86) sont montés sur des parties de guidage fixes (56, 58) de manière à être rigides dans la direction se trouvant à angle droit par rapport au plan du châssis (20) de telle sorte que la tige de couplage (92) est toujours parallèle au plan du châssis (20), même lorsque les parties du guidage (52, 54) s'étendent selon des valeurs différentes.

10. Châssis selon la revendication 9, **caractérisé en ce que** les couplages d'entraînement unidirectionnels se composent de fentes d'entraînement (160, 162) s'étendant dans la direction longitudinale du levier de couplage (164) et de broches d'entraînement (156, 158) s'étendant dans les dites fentes et supportées par les parties de guidage mobiles (52, 54).

11. Châssis selon la revendication 9, **caractérisé en ce que** les couplages d'entraînement unidirectionnels comprennent des éléments de liaison et d'entraînement (172, 174) dont une extrémité est reliée de manière articulée à une extrémité voisine du levier de couplage (164) tandis que l'autre extrémité est reliée de manière articulée à la partie de guidage mobile voisine (52, 54).

12. Châssis selon l'une quelconque des revendications 9 à 11, **caractérisé en ce que** les extrémités des parties de guidage mobiles (52, 54) qui sont éloignées des roues portent chacune un palier axial (152, 154) au moyen duquel le couplage d'entraînement unidirectionnel (156 à 162; 172, 174) est en prise avec la partie de guidage mobile (52, 54).

13. Châssis de machine destinée au rabotage de surfaces routières, en particulier un petit outil de fraisage, avec un châssis (10) supporté par des roues avant (26, 28) et des roues arrière (30, 32), les roues avant (26, 28) étant suspendues de manière à être aptes à suivre des variations de la pente transversale de la surface routière dans une direction opposée et selon des valeurs similaires, et des supports de roue (48, 50) pour les roues avant (26, 28) qui sont reliés à des dispositifs de guidage associés (52 à 58; 220, 222; 234, 234) qui les guident respectivement dans un plan à angle droit par rapport au plan du châssis (20) et parallèles à l'axe longitudinal du châssis et les parties de guidage mobiles (52, 54; 220, 234; 236, 238) pour les roues avant étant couplées de manière positive à un dispositif de couplage (156 à 164; 166, 172, 174; 202 à 218; 224 à 230; 278) pour le mouvement dirigé de manière opposée selon les mêmes valeurs,
le dispositif de couplage comprenant deux pignons (206, 208) montés de manière rotative sur le châssis, chacun des pignons coopérant avec un agencement formant dent (202, 204) qui est déplacé en même temps par la partie de guidage mobile (52, 54; 234) et en ce que, entre deux pignons (206, 208), se trouve un dispositif de transmission de couple (214 à 218),
**caractérisé en ce que** les supports de roues (48, 50) sont montés sur des tiges de guidage (52, 54) qui s'étendent respectivement et de manière rotative dans des éléments de guidage associés (56, 58) et sont reliées à des anneaux de liaison (84, 86) pour être mobiles axialement mais verrouillées en rotation, les axes des parties de guidage (56, 58) se trouvant à angle droit par rapport au plan du châssis (20),
**en ce que** les deux anneaux de liaison (84, 86) s'étendent dans un plan parallèle au plan (20) du châssis et sont fixés dans une direction qui se trouve à angle droit par rapport au plan du châssis (20) mais peuvent tourner autour de leur axe vertical, et
**en ce que** les anneaux de liaison (84, 86) sont montés sur des parties de guidage fixes (54, 58) de manière à être rigides dans la direction se trouvant à angle droit par rapport au plan du châssis (20) de telle sorte que la tige d'accouplement (92) est toujours parallèle au plan du châssis (20), même lorsque les parties du guidage (52, 54) s'étendent selon des valeurs différentes.

14. Châssis selon la revendication 13, **caractérisé en ce que** le dispositif de transmission de couple comprend une transmission par chaîne (214 à 218) ou un câble de commande par engrenage.

15. Châssis de machine destinée au rabotage de surfaces routières, en particulier un petit outil de fraisage, avec un châssis (10) supporté par des roues avant (26, 28) et des roues arrière (30, 32), les roues avant (26, 28) étant suspendues de manière à être aptes à suivre des variations de la pente transversale de la surface routière dans une direction opposée et selon des valeurs similaires, et des supports de roue (48, 50) pour les roues avant (26, 28) qui sont reliés à des dispositifs dé guidage associés (52 à 58; 220, 222; 234, 234) qui les guident respectivement dans un plan à angle droit par rapport au plan du châssis (20) et parallèles à l'axe longitudinal du châssis et les parties de guidage mobiles (52, 54; 220, 234; 236, 238) pour les roues avant étant couplées de manière positive à un dispositif de couplage (156 à 164; 166, 172, 174; 202 à 218; 224 à 230; 278) pour le mouvement dirigé de manière opposée selon les mêmes valeurs,
**caractérisé en ce que** le dispositif de couplage comprend : deux capteurs de force (250, 252) et, reliées mécaniquement en série à ces derniers, deux entretoises (240, 242) réglables en longueur, les supports de roues (48, 50) étant supportés sur le châssis (10) au moyen de ce circuit série, et une unité de commande (278) qui obéit aux signaux de sortie provenant des deux capteurs de force (250, 252) et qui ainsi actionne les entretoises (240, 242) réglables dans leur longueur en fonction de la différence entre ces signaux de sortie de telle sorte que leur longueur varie selon des valeurs similaires et dans la direction opposée tandis que simultanément, les signaux de sortie provenant des deux capteurs de force (250, 252) tendent à s'égaler.

16. Châssis selon l'une quelconque des revendications 1 à 15, **caractérisé en ce que** les supports de roues (48, 50) sont montés sur des éléments de liaison (220, 234) qui sont montés sur le châssis (10) de manière à pouvoir pivoter autour d'axes (222, 235) qui se trouvent à angle droit par rapport au plan central à travers le châssis.

17. Châssis selon l'une quelconque des revendications 1 à 16, **caractérisé en ce que** les supports de roues (48, 50) sont montés sur des tiges de guidage (52, 54) qui s'étendent dans des cylindres de guidage (56, 58) dont l'axe se trouve à angle droit par rapport au plan du châssis (20).

18. Châssis selon la revendication 17, **caractérisé en ce que** les tiges de guidage (52, 54) s'étendent respectivement et de manière rotative dans des cylindres de guidage associés (56, 58) et sont reliées à des anneaux de liaison (84, 86) pour être mobiles axialement mais verrouillées en rotation.

19. Châssis selon la revendication 18, **caractérisé en ce que** les deux anneaux de liaison (84, 86) s'étendent dans un plan parallèle au plan (20) du châssis et sont fixés dans une direction qui se trouve à angle droit par rapport au plan du châssis (20).

20. Châssis selon la revendication 19, **caractérisé en ce que** les anneaux de liaison (84, 86) sont montés sur des parties de guidage fixes (54, 58) de manière à être rigides dans la direction se trouvant à angle droit par rapport au plan du châssis (20) de telle sorte que la tige d'accouplement (92) est toujours parallèle au plan du châssis (20), même lorsque les parties du guidage (52, 54) s'étendent selon des valeurs différentes.

21. Châssis selon la revendication 20, **caractérisé en ce que** les anneaux de liaison (84) sont montés par une liaison présentant la forme d'un verrou sur des plaques axiales formant paliers (150) montées sur les parties de guidage fixes (56, 58) de manière à être rigides mais à pouvoir pivoter autour de leurs axes verticaux.
